# EUROPÄISCHE PATENTSCHRIFT

(11) **EP 0 679 488 B1**
(45) Veröffentlichungstag und Bekanntmachung des Hinweises auf die Patenterteilung: **05.08.1998**
(21) Anmeldenummer: 95104464.3
(22) Anmeldetag: 27.03.1995
(51) Int. Cl.: B29C 44/08, B29C 44/58

(54) **Verfahren zur Herstellung eines Formkörpers aus mindestens zwei Kunststoffschaumstoffen unterschiedlicher Dichte und Formwerkzeug zur Durchführung**
Process and mould for making foam articles of at least two different densities
Procédé et moule pour la production d'un article en mousse de densités différentes

(30) Priorität: 28.04.1994 CH 1341/94
(43) Veröffentlichungstag der Anmeldung: 02.11.1995
(73) Patentinhaber: Kork AG Boswil, CH-5623 Boswil (CH)
(72) Erfinder: Spirig, Josef, CH-6515 Cugnasco (CH)
(74) Vertreter: Blum, Rudolf Emil Ernst

(56) Entgegenhaltungen:
- DE-A- 3 405 231
- DE-U- 9 218 348
- GB-A- 2 104 831
- US-A- 4 246 213
- US-A- 4 492 663

## Beschreibung

Die vorliegende Erfindung betrifft ein Verfahren zur Herstellung eines Formkörpers aus mindestens zwei Kunststoffschaumstoffen unterschiedlicher Dichte, welcher Formkörper innen einen Kunststoffschaumstoff mit einer ersten Dichte aufweist, der von einem äusseren Kunststoffschaumstoff mit einer zweiten, von der ersten verschiedenen Dichte vollständig umhüllt ist, wobei unterschiedliche, körnige Kunststoffausgangsmaterialien in ein Formwerkzeug eingebracht, durch Bedampfen geschäumt, miteinander verbunden und ausgehärtet werden. Weiter betrifft die Erfindung ein Formwerkzeug zur Durchführung des Verfahrens. Dabei kann das Kunststoffausgangsmaterial für den Kunststoffschaumstoff mit der ersten Dichte ein recycliertes Material sein oder enthalten.

Die Formkörper können allgemein plattenförmig ausgebildet sein und beispielsweise als Trittschalldämpfungsplatten zum Einsatz kommen.

Verschiedene, bekannte Verfahren zur Herstellung solcher Formkörper bedingen aufwendige Formwerkzeuge und einen gewissen Zeitaufwand zur Herstellung eines jeweiligen Formkörpers.

In der DE-U-92 18 348 sind ein Verfahren und ein Formwerkzeug zur Herstellung eines Formkörpers aus mindestens zwei Kunststoffschaumstoffen beschrieben. Gemäss dem beschriebenen Verfahren wird zuerst der innere Kunststoffschaumkörper ausgebildet, der durch Halteglieder gleichsam in der Schwebe gehalten wird, und danach wird dieser Kunststoffschaumkörper durch weiteres Schaumstoffrohmaterial umhüllt. Das dazu notwendige Formwerkzeug ist entsprechend aufwendig ausgebildet.

Hier will die Erfindung Abhilfe schaffen. Die Erfindung, wie sie in den Ansprüchen gekennzeichnet ist, löst die Aufgabe, ein Verfahren zur Herstellung eines Formkörpers aus mindestens zwei Kunststoffschaumstoffen unterschiedlicher Dichte zu schaffen, gemäss welchem eine Teilmenge des Ausgangsmaterials des einen Kunststoffschaumstoffes zu einem Aufnahmebehälter mit einem Füllraum zur Aufnahme des Ausgangsmaterials des anderen Kunststoffschaumstoffes umgeformt wird.

Die durch die Erfindung erreichten Vorteile sind im wesentlichen darin zu sehen, dass mittels dem Verfahren der Zeitaufwand zur Herstellung eines solchen Kunststoffkörpers verkürzt werden kann. Das Formwerkzeug zur Durchführung des Verfahrens kann wesentlich einfacher aufgebaut sein, weil das Ausgangsmaterial des einen Kunststoffschaumstoffes selbst als Formteil für das Ausgangsmaterial des anderen Kunststoffschaumstoffes ausgenützt wird.

Im folgenden wird die Erfindung anhand von mehrere Ausführungswege darstellenden Zeichnungen näher erläutert.
Abbildung 1 zeigt schematisch ein Formwerkzeug,
Abbildungen 2-7 zeigen die grundsätzlichen Schritte des Herstellungsverfahrens,
Abbildungen 8 und 9 zeigen eine Variante des Herstellungsverfahrens, und
Abbildungen 10-13 zeigen verschiedene Ausführungen von plattenförmigen Formkörpern.

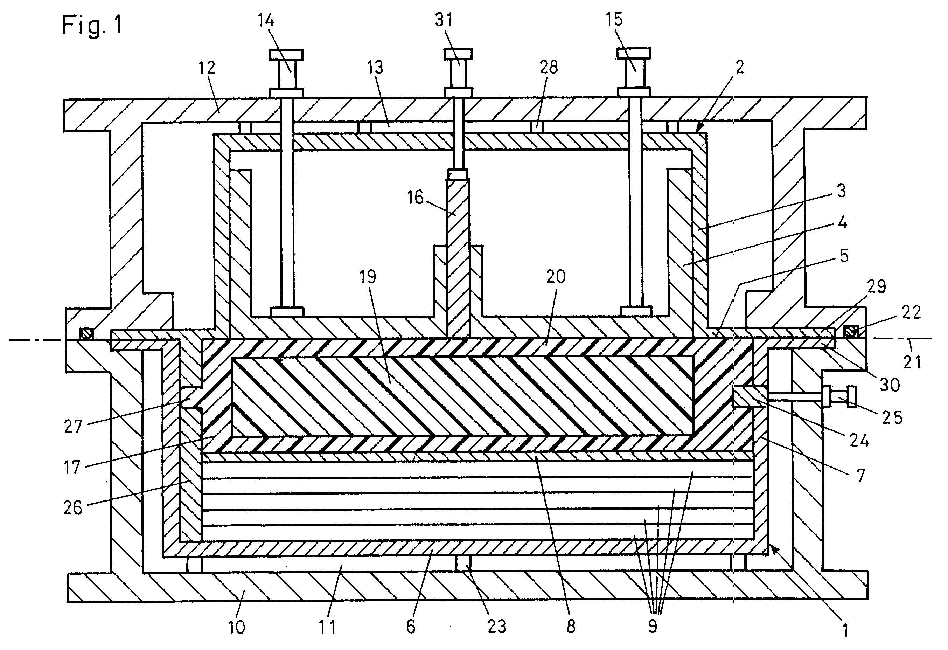

Das in der Figur 1 gezeigte Formwerkzeug weist allgemein einen unteren, ersten Formkasten 10 und einen oberen, zweiten Formkasten 12 auf. Die Formteilung ist mit der Bezugsziffer 21 angedeutet. Die Formkästen 10, 12 sind mittels einer Dichtung 22 gegeneinander abgedichtet.

Im unteren Formkasten 10 ist ein erster, wannenförmiger Formabschnitt 1 mit einem Wannenboden 6 und Wannenseitenwänden 7 angeordnet. Der Formabschnitt 11 ist über Tragstücke 23 in einem Abstand vom Formkasten 10 gehalten, so dass zwischen diesen zwei Bauteilen ein Zwischenraum, eine Kammer 11 gebildet ist. Diese Kammer 11 kann je nach Verfahrensschritt von Dampf oder Kühlwasser durchströmt werden, auch kann darin ein Vakuum erstellt werden.

Der Formabschnitt 1 weist einen plattenförmigen Formboden 8 auf, dessen Lage durch Einlegen verschiedener plattenförmiger Unterlagen 9 wählbar ist. Das heisst, sein Abstand vom Wannenboden 6 kann abhängig von der Dimensionierung eines herzustellenden Formkörpers durch die Unterlagen 9 gewählt werden.

In der in der Figur 1 rechts gelegenen Seitenwand 7 des Formabschnitts 1 ist ein verschiebbares Lineal 24 angeordnet, das mit einer Betätigungsvorrichtung 25, z.B. eine hydraulisch oder pneumatisch betriebene Kolben/Zylindervorrichtung, verbunden ist. Dieses Lineal 24 dient zum Formen einer Nut im herzustellenden Formkörper und wird zum Entformen durch die Betätigungsvorrichtung 25 zurückgezogen. Ein weiteres, nicht gezeichnetes Lineal ist in einer an der Seitenwand 7 anliegenden Seitenwand angeordnet, so dass ein beispielsweise plattenförmiger Formkörper bei zwei Seiten eine Nut aufweist. Bei der entgegengesetzten Seitenwand des unteren Formabschnittes 1 ist z.B. durch eine Einlage 26 und zusätzlichen, in der Figur 1 ersichtlichen Baugliedern der Formabschnitt zur Bildung eines Kammes 27 im plattenförmigen Formkörper ausgebildet. Entsprechend den Nuten sind die zwei weiteren Seiten des plattenförmigen Formkörpers mit Kämmen 27 ausgebildet. Beim Verlegen dieser beispielsweisen plattenförmigen Formkörpern greifen somit bei benachbarten Platten die Nuten die entsprechenden Kämme ein.

Der zweite, obere Formabschnitt 2 des Formwerkzuges weist als hauptsächliste Bauglieder einen Zylinderteil 3 und einen Kolbenteil 4 auf, welche Teile 3,4 im zweiten, oberen Formkasten 12 angeordnet sind. Zwischen dem Zylinderteil 3 und dem Formkasten 12 ist ein eine Kammer bildender Zwischenraum 1 vorhanden, der je nach Verfahrensschritt von Dampf oder Kühlwasser durchströmt oder in welchem ein Vakuum erstellt werden kann. Die Bezugsziffer 28 bezeichnet Tragstücke zwischen dem Zylinderteil 3 und dem Formkasten 12.

Es ist ersichtlich, dass der Zylinderteil 3 einen abstehenden Umfangsrandabschnitt 29 aufweist, bei welchem er auf einem entsprechenden Umfangsrandabschnitt 30 des unteren Formabschnittes 1 aufliegt, wobei ein nicht auf dem unteren Formabschnitt 1 aufliegender Oberflächenabschnitt 5 des Zylinderteils 3 vorhanden ist, auf den später noch im Einzelnen eingegangen wird.

Der Kolbenteil 4 ist im Zylinderteil 4 gegen den unteren, wannenförmigen Formabschnitt 1 verschiebbar geführt. Die Bewegung des Kolbenteils 4 wird durch hydraulische oder pneumatische Betätigungsvorrichtungen 14, 15 gesteuert.

Bei der gezeichneten Ausführung ist der Kolbenteil 4 von einem unabhängig von demselben bewegbaren Schieber 16 durchsetzt, der durch eine weitere hydraulische oder pneumatische Betätigungsvorrichtung 31 gesteuert ist. Es ist zu bemerken, dass diese einen Schieber 16 enthaltende Ausführung nur ein Beispiel ist. Weitere Ausführungen enthalten keinen oder auch mehrere Schieber.

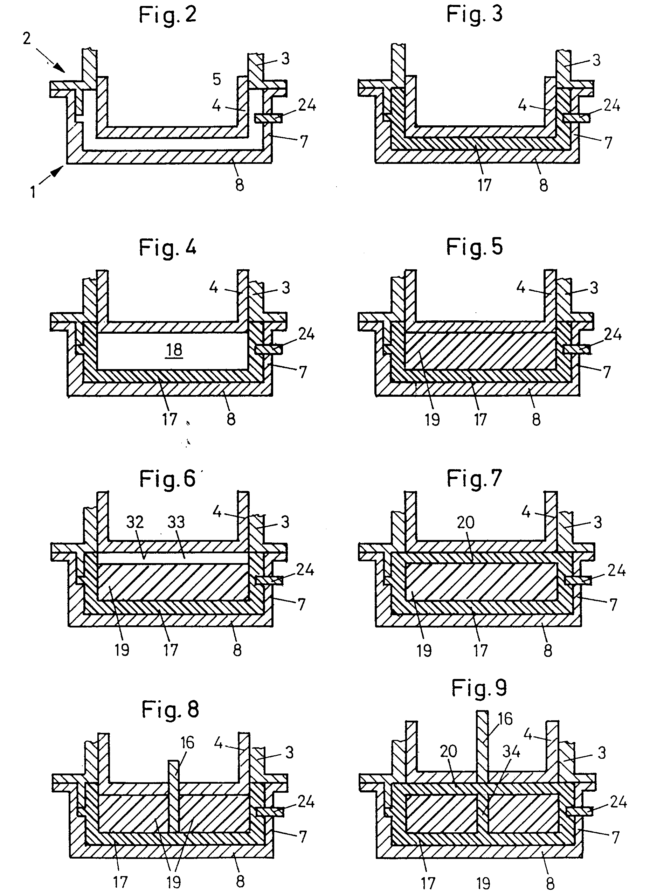

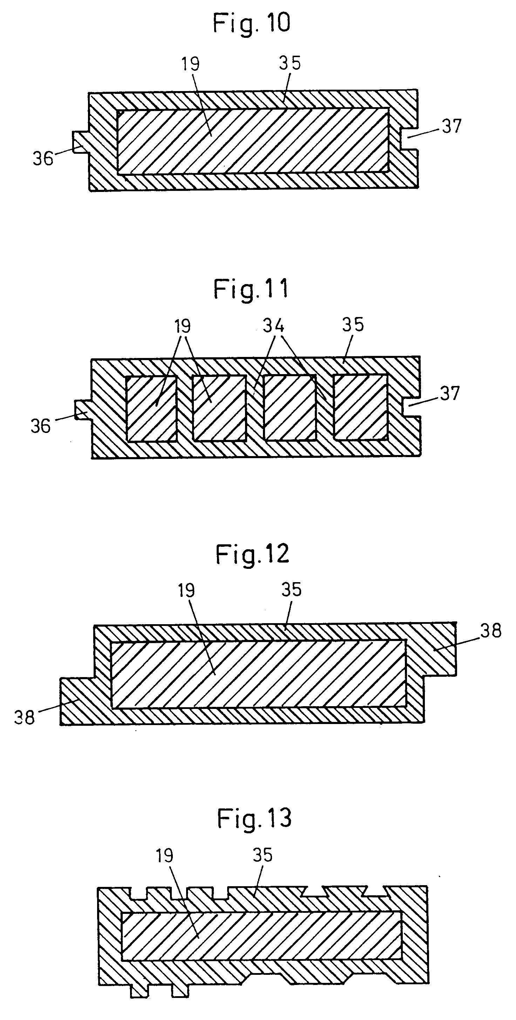

Anhand der Figuren 2-7 wird nun eine Ausführung des erfindungsgemässen Verfahrens beschrieben. Dabei wird davon ausgegangen, dass kein Schieber 16 im Kolbenteil 4 vorhanden ist, so dass ein Formkörper gemäss der Darstellung in den Figuren 1 oder 10 hergestellt wird.

Der Formkörper soll aus zwei Kunststoffschaumstoffen unterschiedlicher Dichte und einstückig ausgebildet sein. Als Beispiel soll angenommen sein, das die Kunststoffmaterialien Polystyrol sind, wobei das Kunststoffmaterial für den innenliegenden Kunststoffschaumstoff ein recycliertes Material ist oder zumindestens enthält. Weiter, abhängig beispielsweise vom recyclierten Kunststoff, kann der innenliegende Kunststoff eine höhere oder dann eine niedrigere Dichte als der aussenliegende Kunststoff aufweisen. Wichtig ist nur, dass unterschiedliche Dichten vorliegen. Beim vorliegenden Beispiel sei angenommen, dass die genannte zweite Dichte höher als die erste Dichte ist, somit beispielsweise ein Formkörper hergestellt werden soll, dessen innerer Kunststoffschaumstoff die niedrigere (erste) Dichte und dessen äusserer Kunststoffschaumstoff die höhere (zweite) Dichte aufweist, wobei der innere Kunststoffschaumstoff gegebenenfalls recycliertes Material enthält.

Das Kunststoffmaterial höherer Dichte kann z.B. eine Dichte von 20-40 kg/m³ aufweisen. Das Kunststoffmaterial kleinerer Dichte, bzw. das Recyclingmaterial enthaltende oder daraus bestehende Kunststoffmaterial kann z.B. eine Dichte von 12 kg/m³ aufweisen.

Die Kunststoffausgangsmaterialien liegen in bekannter Weise in einer körnigen Form vor.

Zum ersten Herstellungsschritt wird die Form, also das Formwerkzeug geschlossen. Zu bemerken ist, dass die untere Seite des Formwerkzeugs, d.h. der untere Formkasten 10 mit dem ersten Formabschnitt 1 bewegbar ist und der obere Formkasten 12 mit dem Zylinderteil 3 ortsfest ist.

Der Kolbenteil 4 wird in seine unterste Stellung nach Figur 2 bewegt und das Lineal, bzw. die Lineale 24 eingefahren.

Damit ergibt sich ein Formraum, der allgemein durch den unteren, ersten Formabschnitt 1, d.h. seinen Seitenwänden 7 und dem Formboden 8, weiter durch den ausgefahrenen Kolbenteil 4 des oberen zweiten Formabschnittes 2 und dessen Oberflächenabschnitte 5 umgrenzt ist. Dieser Formraum wird ausgeblasen und danach mit z.B. 20-40 kg/m³ Reinperlen, eine erste Teilmenge 17 des Kunststoffausgangsstoffes für den äusseren Kunststoffschaumstoff höherer Dichte gefüllt. Der eingefüllte Kunststoffausgangsstoff 17 wird danach bedampft, indem Dampf durch die Kammer 11 zirkuliert wird. Damit werden die Perlen, bzw. Körner dieses Kunststoffausgangsstoffes teilweise, jedoch nicht vollständig miteinander verschweisst. Danach wird durch Anlegen eines Vakuums gekühlt. Somit liegt diese erste Teilmenge 17 dieses teilweise verschweissten Kunststoffausgangsstoffes in der in der Figur 3 gezeigten und mit der Bezugsziffer 17 aufgezeigten Form vor.

Danach wird der Kolbenteil 4 in die Stellung nach Figur 4 hochgefahren. Es ist nun ersichtlich, dass die erste Teilmenge 17 des Kunststoffausgangsmaterials die Form eines Aufnahmebehälters mit einem Füllraum 18 aufweist. Somit bildet der Kolbenteil 4 zusammen mit der behälterförmigen ersten Teilmenge 17 eine Gussform für den nächstfolgenden Schritt.

In den Füllraum 18 wird nun das Kunststoffausgangsmaterial 19 für den inneren Kunststoffschaumstoff kleinerer Dichte und/oder recyclierter Kunststoff eingefüllt, so dass der Zustand nach Figur 5 erreicht wird. Durch eine kleinere Verschiebung des Kolbenteils 4 wird das eingefüllte Kunststoffausgangsmaterial 19 zusammengepresst und danach bedampft. Die nachfolgende Kühlung erfolgt, indem ein Vakuum angelegt wird.

Zur Durchführung des nächsten Schrittes wird der Kolbenteil 4 noch weiter, in die Stellung nach Figur 6 hochgehoben, bei der seine untere Seite 32 mit dem Oberflächenabschnitt 5 des Zylinderteils 3 fluchtet. Somit ergibt sich ein Formraum 33, der duch die untere Seite 32 des Kolbenteils 4, der Oberfläche des Kunststoffkörpers 19 und Oberflächenabschnitten des Kunststoffkörpers 17 umgrenzt ist. In diesen Formraum 33 wird die zweite Teilmenge des Kunststoffausgangsmaterials für den äusseren Kunststoffschaumstoff höherer Dichte, z.B. wieder Reinperlen mit einer Dichte von 20-40 kg/m³ eingefüllt, welche Teilmenge den in der Figur 7 mit der Bezugsziffer 20 angedeuteten Bereich einnimmt. Der insgesamte Kunststoffkörper gemäss der Figur 7 wird von allen Seiten bedampft, danach mit Wasser gekühlt und durch ein Anlegen eines Vakuums noch weiter gekühlt. Das Lineal 24 (d.h. die Lineale) wird (werden) zurückgefahren wie in der Figur 7 dargestellt ist und danach kann der fertiggestellte Formkörper entformt und ausgestossen werden.

Es liegt somit eine Kunststoffplatte mit Nut und Kamm vor, die einen Kern aus einem Kunststoffschaumstoffmaterial kleinerer Dichte und/oder recyclierten Kunststoff aufweist, der von einem Kunststoffschaumstoffmaterial höherer Dichte vollständig umgeben ist.

Eine Variante der Ausführung wird nachfolgend anhand der Zeichnungsfiguren 8 und 9 beschrieben. Der plattenförmige Formkörper soll einen verstärkenden Zwischensteg aufweisen. Dazu ist das Formwerkzeug derart ausgebildet, wie grundsätzlich in der Figur 1 dargestellt ist, nämlich mit einem im Kolbenteil 4 geführten zusätzlichen Schieber 16 mit der pneumatischen oder hydraulischen Betätigungsvorrichtung 31.

Nachdem der Verfahrensschritt nach der Figur 4 beendet worden ist, wird der Schieber 16 ausgefahren bis er die obere Fläche der formfesten ersten Teilmenge 17 berührt. Danach wird der Kunststoff kleinerer Dichte, bzw. recyclierter Kunststoff, mit der Bezugsziffer 19 angedeutet, eingebracht, so dass in der formfesten ersten Teilmenge 17 zwei mittels dem Schieber 16 voneinander getrennte Kunststoffkörper vorliegen, wie in der Figur 8 gezeichnet ist.

Nach der anhand der Figur 5 beschriebenen Behandlung wird der Kolbenteil 4 in die grundsätzlich in der Figur 6 gezeigte Stellung zurückgezogen, wobei, wie nun in der Figur 9 gezeigt ist, der Schieber 16 ebenfalls zurückgezogen wird.

Beim nächsten Einfüllen der zweiten Teilmenge 20 des Kunststoffausgangsmaterials für den äusseren Kunststoffschaumstoff höherer Dichte wird sowohl der Formraum 33 (siehe Figur 6) als auch der durch den nunmehr zurückgezogenen Schieber 16 vorhandene Raum mit diesem Kunststoffausgangsmaterial gefüllt, so dass nach der Behandlung, die anhand der Figur 7 beschrieben worden ist, der Kunststoffkörper einen Verstärkungssteg 34 enthält.

Mit dem beschriebenen Verfahren und entsprechend ausgebildeten Formwerkzeugen lassen sich beispielsweise plattenförmige Formkörper verschiedener Ausbildungen herstellen, wie beispielsweise in den Figuren 10-13 gezeichnet ist.

Figur 10 zeigt einen plattenförmigen Formkörper, der innen einen Kunststoffschaumstoff 19 kleinerer Dichte und/oder recyclierter Kunststoffschaumstoff enthält und der von einem Kunststoffschaumstoff höherer Dichte, mit der Bezugsziffer 35 bezeichnet, vollständig umhüllt ist, wobei der Formkörper ein Kamm 36 und eine Nut 37 aufweist. Dieser Formkörper lässt sich gemäss der ersten oben beschriebenen Ausführungsvariante herstellen.

Mit der zweiten beschriebenen Ausführungsvariante, d.h. mit dem im Kolbenteil 4 angeordneten Schieber 16 kann ein plattenförmiger Kunststoffformkörper nach der Figur 11 hergestellt werden, wobei offensichtlich durch mehrere Schieber 16 auch mehrere Verstärkungsstege 34 ausgebildet werden können.

Figur 12 zeigt einen plattenförmigen Formkörper ähnlich der Figur 10, jedoch mit Schultern 38 anstelle von Nut und Kamm, welche Schultern 38 durch entsprechende Ausbildungen des Formwerkzeuges, grundsätzlich dem Fachmann bekannt, erzeugt werden können.

Die Aussenseite des Formkörpers lässt sich sehr unterschiedlich strukturieren, wobei einige Beispiele in der Figur 13 dargestellt sind. Die gezeigten Vorsprünge, Vertiefungen Nuten und Kämme lassen sich einerseits durch entsprechende Formen der Formwerkzeuge und andererseits durch entsprechende Lineale erzeugen, jedoch immer als Ausführungen des erfindungsgemässen Verfahrens.

## Patentansprüche

1. Verfahren zur Herstellung eines Formkörpers aus mindestens zwei Kunststoffschaumstoffen unterschiedlicher Dichte, welcher Formkörper innen einen Kunststoffschaumstoff mit einer ersten Dichte aufweist, der von einem äusseren Kunststoffschaumstoff mit einer zweiten, von der ersten verschiedenen Dichte vollständig umhüllt ist, wobei unterschiedliche, körnige Kunststoffausgangsmaterialien in ein Formwerkzeug eingebracht, durch Bedampfen geschäumt, miteinander verbunden und ausgehärtet werden, dadurch gekennzeichnet, dass eine erste Teilmenge (17) des Kunststoffausgangsmaterials für den äusseren Kunststoffschaumstoff mit der zweiten Dichte im Formwerkzeug in die Form eines mindestens annähernd formstabilen Aufnahmebehälters mit einem Füllraum (18) überführt wird, danach das Kunststoffausgangsmaterial (19) für den inneren Kunststoffschaumstoff mit der ersten Dichte in den Füllraum eingebracht, zusammengepresst und einer erhöhten Temperatur ausgesetzt wird, und dass mit einer zweiten Teilmenge (20) des Kunststoffausgangsmaterials für den äusseren Kunststoffschaumstoff mit der ersten Dichte der Füllraum (18) verschlossen und durch ein Aufbringen einer erhöhten Temperatur ein vollständiges Verschweissen aller Körner der Kunststoffausgangsmaterialien und damit der zwei unterschiedlichen Kunststoffschaumstoffe bewirkt wird.

2. Verfahren nach Anspruch 1, dadurch gekennzeichnet, dass zur Erreichung der Formstabilität des Kunststoffausgangsmaterials (17) für den äusseren Kunststoffschaumstoff dessen Körner durch Aufbringen von Wärme teilweise miteinander verschweisst werden.

3. Verfahren nach Anspruch 1 oder 2, dadurch gekennzeichnet, dass das Kunststoffausgangsmaterial (19) für den Kunststoffschaumstoff mit der ersten Dichte mindestens zum Teil recyclierter Kunststoff enthält.

4. Verfahren nach einem der vorangehenden Ansprüche, dadurch gekennzeichnet, dass zum Formen des Kunststoffausgangsmaterials (19) für den Kunststoffschaumstoff mit der ersten Dichte die erste, sich im mindestens annähernd formstabilen Zustand befindliche Teilmenge (17) des Kunststoffausgangsmaterials für den Kunststoffschaumstoff mit der zweiten Dichte Teil der Form für das erstgenannte Kunststoffausgangsmaterial (19) bildet, und zum Formen des Kunststoffausgangsmaterials (20) für die zweite Teilmenge des Kunststoffausgangsmaterials für den Kunststoffschaumstoff mit der zweiten Dichte das druck- und temperaturbehandelte Kunststoffausgangsmaterial (19) für den Kunststoffschaumstoff mit der ersten Dichte Teil der Form dazu bildet.

5. Verfahren nach einem der vorangehenden Ansprüche, dadurch gekennzeichnet, dass das Kunststoffausgangsmaterial (17,20) für den Kunststoffschaumstoff mit der zweiten Dichte ein Reinkunststoff ist und das Ueberführen der ersten Teilmenge (17) desselben in einen mindestens annähernd formstabilen Zustand durch ein Beheizen mittels Dampf und nachfolgendes Kühlen durch Anlegung eines Unterdruckes erfolgt, dass das Kunststoffausgangsmaterial (19) für den Kunststoffschaumstoff mit der ersten Dichte ein Reinkunststoff und/oder recyclierter Kunststoff ist, welches Kunststoffausgangsmaterial (19) nach dem Einfüllen zusammengepresst, mittels Dampf beheizt und nachfolgend durch Anlegen eines Unterdruckes gekühlt wird, und dass nach dem Einbringen der zweiten Teilmenge (20) des Kunststoffausgangsmaterials für den Kunststoffschaumstoff mit der zweiten Dichte ein Beheizen mittels Dampf, ein Kühlen mittels Wasser, gefolgt von einem weiteren Kühlen durch Anlegen eines Unterdruckes durchgeführt und danach der fertiggestellte Formkörper entformt wird.

6. Formwerkzeug zur Durchführung des Verfahrens nach Anspruch 1, mit einem ersten, wannenförmigen Formabschnitt (1) und einem damit zusammenwirkenden zweiten Formabschnitt (2), der einen Zylinderteil (3) und einen darin verschiebbar geführten Kolbenteil (4) aufweist, der in den ersten Formabschnitt (1) hineinverschiebbar ist und in einer ersten, in den ersten Formabschnitt (1) hineingeschobenen Stellung mit demselben und einem Oberflächenabschnitt (5) des Zylinderteils (3) den Formraum für die erste Teilmenge des Kunststoffausgangsmaterials für den Kunststoffschaumstoff mit der zweiten Dichte bildet, in einer zweiten, von der ersten um eine Strecke zurückgezogenen Stellung zusammen mit Flächenabschnitten der ersten Teilmenge des Kunststoffausgangsmaterials für den Kunststoffschaumstoff mit der zweiten Dichte den Formraum für den Kunststoffschaumstoff mit der ersten Dichte bildet, und in einer dritten, von der zweiten um eine weitere Strecke zurückgezogenen Stellung zusammen mit mindestens einem Flächenabschnitt des Kunststoffausgangsmaterials für den Kunststoffschaumstoff mit der ersten Dichte den Formraum für die zweite Teilmenge des Kunststoffausgangsmaterials für den Kunststoffschaumstoff mit der zweiten Dichte bildet.

7. Formwerkzeug nach Anspruch 6, dadurch gekennzeichnet, dass der erste Formabschnitt (1) mit einem Wannenboden (6) und Wannenseitenwänden (7) ausgebildet ist und einen in unterschiedlichen Stellungen festlegbaren Formboden (8) zur Herstellung unterschiedlich dimensionierter Formkörper mit demselben Formwerkzeug aufweist, wozu ein Satz plattenförmige, zwischen dem Wannenboden (6) und dem Formboden (8) einsetzbare Unterlagen (9) vorhanden ist, mittels welchen der Abstand zwischen dem Formboden (8) und dem Wannenboden (6) entsprechend der Dimensionierung des hergestellten Formkörpers festlegbar ist, und welcher erste Formabschnitt (1) in einem ersten Formkasten (10) derart eingesetzt ist, dass ein Zwischenraum (11) zwischen demselben (1) und dem ersten Formkasten (10) zur Aufnahme eines jeweiligen ein Erwärmen oder Abkühlen des ersten Formabschnittes (1) bewirkendes Medium gebildet ist.

8. Formwerkzeug nach Anspruch 6 oder 7, dadurch gekennzeichnet, dass der Zylinderteil (3) des zweiten Formabschnittes (2) in einem zweiten Formkasten (12) derart eingesetzt ist, dass ein Zwischenraum (13) zwischen demselben (3) und dem zweiten Formkasten (12) zur Aufnahme eines jeweiligen ein Erwärmen oder Abkühlen bewirkendes Medium gebildet ist, und dass der zweite Formkasten (12) mit hydraulisch oder pneumatisch arbeitenden Betätigungseinrichtungen (14,15) zum Verschieben des Kolbenteiles (4) verbunden ist.

9. Formwerkzeug nach einem der Ansprüche 6-8, dadurch gekennzeichnet, dass der Kolbenteil (4) mindestens einen in den ersten, wannenförmigen Formabschnitt (1) hineinschiebbaren Schieber (16) aufweist, der in der zweiten Stellung des Kolbenteils (4) in den Füllraum des durch die erste Teilmenge des Kunststoffausgangsmateriales für den äusseren Kunststoffschaumstoff gebildeten mindestens annähernd formstabilen Aufnahmebehälters hineinschiebbar ist und zur Bildung mindestens einer Verstärkungsrippe aus dem Kunststoffschaumstoff mit der zweiten Dichte im Kunststoffschaumstoff mit der ersten Dichte dient.

## Claims

1. Method of producing a shaped body of at least two foamed plastic materials of a differing density, which shaped body includes at the inside a foamed plastic material of a first density, which is completely surrounded by an outer foamed plastic material of a second density which differs from the first density, whereby differing, granular plastic raw materials are placed into a moulding tool, foamed by a vaporing, interconnected and set, characterised in that a first partial amount (17) of the plastic raw material for the outer foamed plastic material with the second density is converted into the shape of a at least approximately form-stable receptacle with a filling space (18), thereafter the plastic raw material (19) of the first density is placed into the filling space, condensed and exposed to an elevated temperature, and in that the filling space (18) is closed by a second partial amount (20) of the plastic raw material for the outer foamed plastic material of the first density, and that a complete fusing of all grains of the plastic raw materials and accordingly of the two differing foamed plastic materials is caused by an application of an elevated temperature.

2. Method according to claim 1, characterised in that in order to reach the form-stable state of the raw plastic material (17) for the outer foamed plastic material its grains are fused partly by application of heat.

3. Method according to claim 1 or 2, characterised in that the raw plastic material (19) for the foamed plastic material of the first density includes at least in part recycled plastic materials.

4. Method according to one of the preceding claims, characterised in that in order to shape the raw plastic material (19) for the foamed plastic material of the first density the first partial amount (17) of the raw plastic material for the foamed plastic material with the second density which is in a at least approximate form-stable state form a part of the mould for the first named raw plastic material (19), and in that for the forming of the raw plastic material (20) for the second partial amount of the raw plastic material for the foamed plastic material of the second density, the pressure and temperature treated raw plastic material (19) for the foamed plastic material of the first density forms a part of the mould thereto.

5. Method according to one of the preceding claims, characterised in that the raw plastic material (17, 20) for the foamed plastic material of the second density is a pure plastic material, and that the conversion thereof into a at least approximately form-stable state proceeds by a heating by means of steam followed by a cooling by an application of a sub-atmospheric pressure, that the raw plastic material (19) for the foamed plastic material of the first density is a pure plastic material and/or a recycled plastic material, which raw plastic material (19), after having been placed, is condensed, heated by means of steam and thereafter cooled, and that after the placing of the second partial amount (20) of the raw plastic materials for the foamed plastic material of the second density a heating by steam, a cooling by water followed by a further cooling by application of a sub-atmospheric pressure is carried out, and the finally produced shaped body is thereafter removed from the mould.

6. Moulding tool for carrying out the method according to claim 1, with a first trough-shaped moulding section (1) and a second moulding section (2) co-operating therewith and having a cylinder part (3) and a piston part (4) guided for movement therein, which is insertable into the first moulding section (1) and forms in a first position inserted into the first moulding section (1) together with same and a surface section (5) of the cylinder part (3) the moulding space for the first partial amount of the raw plastic material for the foamed plastic material of the second density forms in a second position retracted from the first one by a distance together with surface sections of the first partial amount of the raw plastic material for the foamed plastic material of the second density the moulding space for the foamed plastic material of the first density, and forms in a third position retracted from the second one by a further distance together with at least one surface section of the raw plastic material for the foamed plastic material of the first density the moulding space for the second partial amount of the raw plastic material for the foamed plastic material of the second density.

7. Moulding tool according to claim 6, characterised in that the first moulding section (1) is formed with a trough bottom (6) and trough sidewalls (7) and includes a mould bottom (8) which is positionable in various positions for the production of differing dimensional shaped bodies by one and the same moulding tool, whereby a set of plate-shaped base supports (9), which may be placed between the bottom (6) of the trough and the bottom (8) of the mould is present, by means of which the distance between the mould bottom (8) and the trough bottom (6) can be set in accordance with the dimension of the shaped body produced, and in that said first moulding section (1) is set into a first moulding box (10) in such a manner that an interspace (11) is formed between same (1) and the first moulding section (10) for the receipt of a respective medium causing a heating or cooling of the first moulding section (1).

8. Moulding tool according to claim 6 or 7, characterised in that the cylinder part (3) of the second moulding section (2) is set into a second moulding box (12) in such a manner that an interspace (13) is formed between same (3) and the second moulding box (12) for the receipt of a respective medium causing a heating or cooling and that the second moulding box (12) is connected to hydraulically or pneumatically working operating devices (14, 15) for a displacing of the piston part (4).

9. Moulding tool according to one of the claims 6 - 8, characterised in that the piston part (4) includes at least one slider (16) which is insertable into the first trough-shaped moulding section (1), which in the second position of the piston part (4) is insertable into the filling space of the at least approximately form-stable receiving receptacle which is formed by the first partial amount of the raw plastic material for the outer foamed plastic material and serves for the forming of at least one reinforcing rib consisting of the foamed plastic material of the second density in the foamed plastic material of the first density.

## Revendications

1. Procédé pour fabriquer un corps en forme composé d'au moins deux matières plastiques expansées de densités différentes, le corps en forme comportant à l'intérieur une matière plastique expansée présentant une première densité et entièrement entourée d'une matière plastique expansée extérieure présentant une seconde densité différente de la première, différents matériaux plastiques granulés de base étant placés dans un moule, expansés à la vapeur, mutuellement réunis et durcis, caractérisé en ce qu'on forme dans le moule une cavité (18) ayant une forme au moins approximativement stable avec une première partie (17) du matériau plastique de base du matériau plastique de base destiné à former la matière plastique expansée extérieure présentant la seconde densité, qu'on introduit ensuite dans cette cavité le matériau plastique de base (19) destiné àformer la matière plastique expansée intérieure présentant la première densité, qu'on l'y compresse et l'y soumet à une élévation de température, qu'on ferme la cavité (18) avec une seconde partie (20) du matériau plastique de base destiné à former la matière plastique expansée extérieure présentant la première densité, et qu'on réalise par échauffement l'agglomération totale de tous les granules des matériaux plastiques de base, et par là des deux matières plastiques expansées différentes.

2. Procédé selon la revendication 1, caractérisé en ce qu'on agglomère partiellement par application de chaleur les granules du matériau plastique de base (17) destinés à former la matière plastique expansée extérieure, afin de stabiliser sa structure.

3. Procédé selon une des revendications 1 ou 2, caractérisé en ce que le matériau plastique de base (19) pour la matière plastique expansée présentant la première densité comprend au moins partiellement un matériau plastique recyclé.

4. Procédé selon une des revendications précédentes, caractérisé en ce qu'afin de former le matériau plastique de base (19) destiné à former la matière plastique expansée présentant la première densité, une partie du moule est formée par la première partie (17) ayant une forme approximativement stable du matériau plastique de base pour la matière plastique expansée présentant la seconde densité, et en ce qu'afin de former le matériau plastique de base (20) pour la seconde partie du matériau plastique de base destiné à former la matière plastique expansée présentant la seconde densité le moule est formé par le matériau plastique de base (19), traité par pression et chaleur, pour la matière plastique expansée présentant la première densité.

5. Procédé selon une des revendications précédentes, caractérisé en ce que le matériau plastique de base (17, 20) destiné à former la matière plastique expansée présentant la seconde densité est un matériau plastique pur et que le passage de la première partie (17) de celui-ci en une forme au moins approximativement stable est obtenu par chauffage à la vapeur et refroidissement subséquent par application d'une sous-pression, que le matériau plastique de base (19) destiné à former la matière plastique expansée présentant la première densité est un matériau plastique pur et/ou recyclé, ce matériau plastique de base (19) étant comprimé après le remplissage, chauffé à la vapeur et ensuite refroidi par application d'une sous-pression, et qu'après ajout de la seconde partie (20) du matériau plastique de base pour la matière plastique expansée présentant la seconde densité ou effectue un chauffage à la vapeur, un refroidissement à l'eau suivi d'un refroidissement additionnel par application d'une sous-pression, et qu'ensuite on démoule le corps en forme terminé.

6. Outil de formage pour la réalisation du procédé selon la revendication 1, avec une première partie (1) en forme de cuvette et une seconde partie (2) coopérant avec la première et présentant une partie cylindrique (3) dans laquelle un organe en forme de piston (4) est déplaçable jusqu'à pouvoir entrer dans la première partie (1) et former, en une première position poussée à son intérieur et ensemble avec celle-ci et une portion (5) de la partie cylindrique (3), un moule pour la première partie du matériau plastique de base pour la matière plastique expansée présentant la seconde densité, et pour former, en une seconde position rétractée d'une certaine distance par rapport à la première et ensemble avec des portions de surface de la première partie du matériau plastique de base pour la matière plastique expansée présentant la seconde densité, un moule pour la matière plastique expansée présentant la première densité, ainsi que pour former en une troisième position rétractée d'une distance additionnelle par rapport à la seconde et ensemble avec au moins une portion de surface du matériau plastique de base pour la matière plastique expansée présentant la première densité, un moule pour la seconde partie du matériau plastique de base pour la matière plastique présentant la seconde densité.

7. Outil de formage selon la revendication 6, caractérisé en ce que la première partie (1) en forme de cuvette comporte un fond de cuvette (6) et des parois latérales de cuvette (7), ainsi qu'un double fond (8) pouvant être arrêté en diverses positions pour la fabrication de corps en forme de diverses dimensions au moyen du même outil, un jeu de cales (9) en forme de plaques pouvant être insérées entre le fond (6) de la cuvette et le double fond (8) étant prévu au moyen duquel la distance entre le double fond (8) et le fond (6) de la cuvette peut être réglée selon la dimension du corps en forme à fabriquer, la première partie (1) en forme de cuvette étant insérée dans un caisson (10) de manière à laisser un intervalle (11) entre celui-ci et la première partie (1) en forme de cuvette pour recevoir le fluide servant à chauffer ou à refroidir la première partie (1) en forme de cuvette.

8. Outil de formage selon une des revendications 6 ou 7, caractérisé en ce que la partie cylindrique (3) de la seconde partie (2) est insérée dans un second caisson (12) de façon à laisser entre la partie cylindrique (3) et le second caisson (12) un espace (13) pour recevoir un fluide de chauffage ou de refroidissement, et en ce que le second caisson (12) est réuni à des organes d'actionnement (14, 15) hydrauliques ou pneumatiques servant à déplacer l'organe en forme de piston (4).

9. Outil de formage selon une des revendications 6 à 8, caractérisé en ce que l'organe en forme de piston (4) comporte au moins un organe de poussée (16) pouvant être introduit dans la première partie (1) en forme de cuvette et qui, en la seconde position de l'organe en forme de piston (4), peut être poussé à l'intérieur de la cavité à remplir du conteneur au moins approximativement stable formé par la première partie du matériau plastique de base pour la matière plastique expansée extérieure, et servant à former au moins une cannelure de renfort composée de la matière plastique expansée présentant la seconde densité dans la matière plastique expansée présentant la première densité.
